# EUROPÄISCHE PATENTSCHRIFT

(11) **EP 0 842 724 B1**
(45) Veröffentlichungstag und Bekanntmachung des Hinweises auf die Patenterteilung: **29.01.2003**
(21) Anmeldenummer: 97114336.7
(22) Anmeldetag: 20.08.1997
(51) Int. Cl.: B23D 47/00, B23D 49/16, B27C 5/10

(54) **Vorrichtung zur schwenkbaren Befestigung eines Tisches an dem Gehäuse eines Handwerkzeugs**
Device for angularly adjustable mounting of a shoe onto the housing of a hand-held machine tool
Dispositif pour le montage inclinable d'une plaque de base à une machine-outil portable

(30) Priorität: 23.09.1996 EP 96115204
(43) Veröffentlichungstag der Anmeldung: 20.05.1998
(73) Patentinhaber: CEKA ELEKTROWERKZEUGE AG + Co.KG, CH-9630 Wattwil (CH)
(72) Erfinder: Dürr, Paul, 9631 Ulisbach (CH)
(74) Vertreter: Jakelski, Joachim, Dr.

(56) Entgegenhaltungen:
- EP-A- 0 603 552
- US-A- 4 290 464

## Beschreibung

Die Erfindung betrifft eine Vorrichtung zur schwenkbaren Befestigung eines Tisches an dem Gehäuse eines Handwerkzeugs mit einem an dem Tisch angeordneten ersten Befestigungselement, mit einem an dem Gehäuse angeordneten, zu dem ersten Befestigungselement passenden zweiten Befestigungselement und mit einem Verbindungselement zur lösbaren Verbindung des ersten Befestigungselements mit dem zweiten Befestigungselement, wobei die Befestigungselemente stufenlos verschieblich aneinander geführt und mittels des manuell betätigbaren Verbindungselements durch Verspannung aneinander fixierbar sind, und wobei das erste und zweite Befestigungselement Spannaufnahmen aufweisen, die sich beim Verspannen selbst zentrieren.

Eine solche Vorrichtung zur schwenkbaren Befestigung eines Tisches an dem Gehäuse eines Handwerkzeugs geht beispielsweise aus der EP 0 603 552 A1 hervor.

Es ist seit längerem bekannt, Tische an Handwerkzeugen, beispielsweise an Stichsägen oder Oberfräsen anzuordnen. Um beispielsweise mit einer Stichsäge einen Gehrungsschnitt auszuführen, muß der Sägetisch schwenkbar an der Stichsäge befestigt sein.

Aus der nicht vorveröffentlichten EP-A-0 716 898 ist ferner eine Vorrichtung zur schwenkbaren Befestigung eines Sägetisches an dem Gehäuse einer Stichsäge bekannt, bei dem eine Verschwenkung des Sägetisches an der Stichsäge ohne die Zuhilfenahme von Werkzeug möglich ist, wobei im verschwenkten sowie im nicht verschwenkten Zustand des Sägetisches eine verstellsichere, exakt positionierbare Befestigung des Sägetisches an der Stichsäge möglich ist. Bei dieser Vorrichtung zur schwenkbaren Befestigung eines Sägetisches an dem Gehäuse einer Stichsäge ist ein an dem Sägetisch angeordnetes erstes Befestigungselement, ein an dem Gehäuse der Stichsäge angeordnetes, zu dem ersten Befestigungselement passendes zweites Befestigungselement und ein Verbindungsmittel zur lösbaren Verbindung des ersten mit dem zweiten Befestigungsmittel vorgesehen, wobei das erste Befestigungselement eine halbzylindrisch ausgebildete, außenverzahnte Oberfläche und das zweite Befestigungselement eine komplementär zu dem ersten Befestigungselement ausgebildete, halbzylindrisch ausgebildete, innenverzahnte Oberfläche aufweisen, und wobei das Verbindungsmittel eine mit einem manuell betätigbaren, an dem Stichsägengehäuse angeordneten Spannrad versehene, mit dem ersten Befestigungselement verbundene Schraube ist.

Diese Vorrichtung ermöglicht zwar eine werkzeuglose Verschwenkung des Stichsägentisches an dem Gehäuse der Stichsäge. Aufgrund der verzahnten Oberflächen des ersten und zweiten Befestigungselements ist jedoch nur eine Verschwenkung in Stufen möglich, und zwar derart, daß der kleinstmögliche Schwenkwinkel des Sägetisches gerade der Winkelversetzung zweier benachbarter Zähne der Befestigungselemente entspricht.

Der Erfindung liegt die Aufgabe zugrunde, eine Vorrichtung zur schwenkbaren Befestigung eines Tisches an dem Gehäuse eines Handwerkzeugs der gattungsgemäßen Art, welche ein stufenloses Verschwenken des Tisches an dem Gehäuse des Handwerkzeugs ohne die Zuhilfenahme von Werkzeug ermöglicht, derart zu verbessern, daß zugleich eine verstellsichere, exakt positionierbare Befestigung des Tisches an dem Gehäuse des Handwerkzeugs gewährleistet ist.

Diese Aufgabe wird bei einer Vorrichtung zur schwenkbaren Befestigung eines Tisches an einem Handwerkzeug der eingangs beschriebenen Art erfindungsgemäß dadurch gelöst, daß die Spannaufnahmen als Schwalbenschwanzführungen ausgebildet sind.

Die Ausbildung der Spannaufnahmen als Schwalbenschwanzführung sind nicht nur hinsichtlich einer einfachen Herstellung, sondern insbesondere auch im Hinblick auf eine verstellsichere und exakt positionierbare Führung der beiden Befestigungselemente aneinander von besonderem Vorteil.

Insbesondere hinsichtlich einer universellen Einsatzmöglichkeit des Handwerkzeugs ermöglichen die Befestigungselemente vorteilhafterweise eine Verschwenkung des Tisches auf beiden Seiten des Handwerkzeuges um 45°.

Um den Tisch besonders einfach und schnell in verschiedenen vorgegebenen verschwenkten Positionen positionieren zu können, ist vorteilhafterweise vorgesehen, daß in den Befestigungselementen Mittel zur einrastbaren Positionierung des Tisches in wenigstens einer Position vorgesehen sind.

Hinsichtlich der Ausbildung dieser Mittel zur einrastbaren Positionierung des Tisches sind die unterschiedlichsten Ausführungen denkbar. Eine vorteilhafte Ausführung sieht beispielsweise vor, daß die Mittel ein an dem ersten Befestigungselement federnd angeordneter Rastnocken und eine an dem zweiten Befestigungselement angeordnete, komplementär zu dem Rastnocken ausgebildete Aufnahme ist.

In bezug auf die Anordnung der beiden Befestigungselemente sind die unterschiedlichsten Ausführungen denkbar.

Beispielsweise kann vorgesehen sein, daß das erste Befestigungselement starr an dem Gehäuse angeordnet ist und daß das zweite Befestigungselement an dem ersten Befestigungselement beweglich geführt ist.

Darüber hinaus ist aber auch die umgekehrte Anordnung möglich, daß nämlich das zweite Befestigungselement starr an dem Tisch angeordnet ist, und daß das erste Befestigungselement beweglich an dem Gehäuse angeordnet ist.

Weitere Merkmale und Vorteile der Erfindung sind Gegenstand der nachfolgenden Beschreibung sowie der zeichnerischen Darstellung einiger Ausführungsbeispiele.

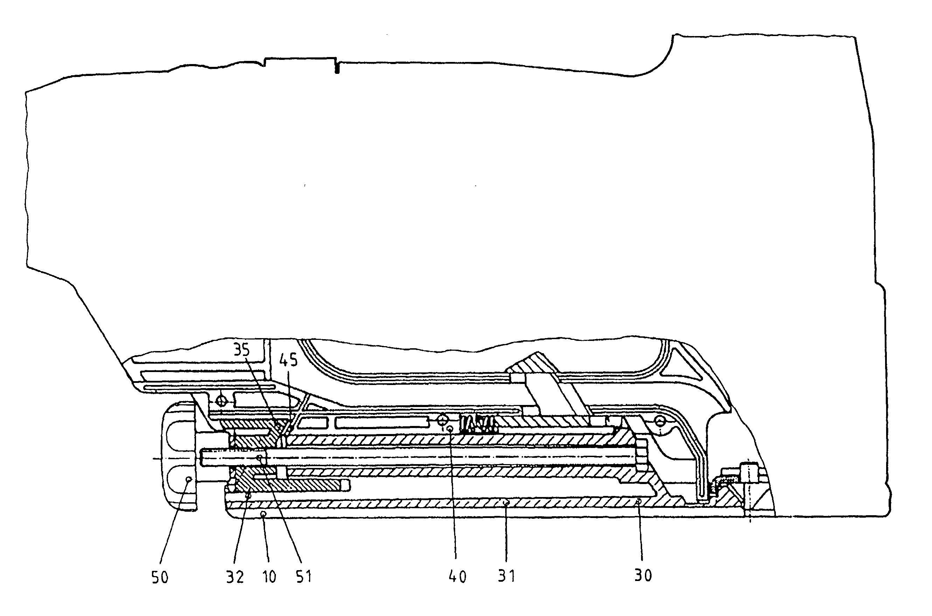

Die Zeichnung zeigt teilweise schnittbildlich ein Ausführungsbeispiel einer erfindungsgemäßen Vorrichtung zur schwenkbaren Befestigung eines Tisches an dem Gehäuse eines Handwerkzeugs.

Ein Ausführungsbeispiel einer Vorrichtung zur schwenkbaren Befestigung eines Tisches 10 an einem Gehäuse eines Handwerkzeugs, beispielsweise einer Stichsäge, dargestellt in der Figur, umfaßt ein mit dem Tisch 10 verbundenes erstes Befestigungselement 30, welches an einem auf das erste Befestigungselement 30 angepaßten, an dem Gehäuse starr angeordneten zweiten Befestigungselement 40 über ein als Spannrad ausgebildetes Verbindungselement 50 arretierbar ist.

Wie aus der Figur hervorgeht, umfaßt sowohl das erste Befestigungselement 30 als auch das zweite Befestigungselement 40 aufeinander angepaßte, selbstzentrierende Spannaufnahmen 35, 45. Diese Spannaufnahmen 35, 45 sind beispielsweise, wie in der Figur dargestellt, als Schwalbenschwanzführungen ausgebildet.

Das erste Befestigungselement 30 umfaßt einen im wesentlichen feststehenden Teil 31 und einen durch Drehen des als Spannrad ausgebildeten Verbindungselements 50 und einer mit diesem Spannrad verbundenen Schraube 51 translatorisch beweglichen zweiten Teil 32, an dem eine der beiden Spannaufnahmen 35 angeordnet ist. Durch Drehen des Spannrades werden die beiden Befestigungselemente 30, 40 aneinander durch Klemmung verspannt und dadurch in einem beliebig verschwenkten Zustand des Tisches 30 aneinander arretiert.

An dem ersten Befestigungselement 30 kann beispielsweise ein oder mehrere federnd angeordnete Rastnocken vorgesehen sein (nicht dargestellt), der/die in eine, mehrere zu dem/den Rastnocken komplementär ausgebildete(n) Aufnahme(n) eingreift/eingreifen (nicht dargestellt).

Dabei können mehrere an vorgegebenen Positionen des Schwenkbereichs angeordnete Aufnahmen vorgesehen sein, so daß eine einrastbare Positionierung des Tisches in wenigstens einer (verschwenkten oder nicht verschwenkten) Position möglich ist.

Eine Verschwenkung des Tisches 10 an dem Gehäuse ist jeweils zu beiden Seiten des Gehäuses um 45° möglich.

## Patentansprüche

1. Vorrichtung zur schwenkbaren Befestigung eines Tisches (10) an dem Gehäuse eines Handwerkzeugs, mit einem an dem Tisch (10) angeordneten ersten Befestigungselement (30), mit einem an dem Gehäuse angeordneten, zu dem ersten Befestigungselement (30) passenden zweiten Befestigungselement (40) und mit einem Verbindungselement (50) zur lösbaren Verbindung des ersten Befestigungselements (30) mit dem zweiten Befestigungselement (40), wobei die Befestigungselemente (30, 40) stufenlos verschieblich aneinandergeführt und mittels des manuell betätigbaren Verbindungselements (50) durch Verspannung aneinander fixierbar sind, und wobei das erste und zweite Befestigungselement (30, 40) Spannaufnahmen (35, 45) aufweisen, die sich beim Verspannen selbst zentrieren, **dadurch gekennzeichnet, daß** die Spannaufnahmen (35, 45) als Schwalbenschwanzführungen ausgebildet sind.

2. Vorrichtung nach Anspruch 1, **dadurch gekennzeichnet, daß** die Befestigungselemente (30, 40) eine Verschwenkung des Tisches (10) auf beiden Seiten des Gehäuses des Handwerkzeugs um 45° ermöglichen.

3. Vorrichtung nach Anspruch 1 oder 2, **dadurch gekennzeichnet, daß** an den Befestigungselementen (30, 40) Mittel zur einrastbaren Positionierung des Tisches in wenigstens einer verschwenkten/nicht verschwenkten Position vorgesehen sind.

4. Vorrichtung nach Anspruch 3, **dadurch gekennzeichnet, daß** die Mittel zur einrastbaren Positionierung des Tisches wenigstens einen an dem ersten Befestigungselement (30) federnd angeordneten Rastnocken und wenigstens eine, an dem zweiten Befestigungselement (40) komplementär zu dem wenigstens einen Rastnocken ausgebildete Aufnahme umfassen.

5. Vorrichtung nach einem der voranstehenden Ansprüche, **dadurch gekennzeichnet, daß** das erste Befestigungselement (30) starr an dem Gehäuse angeordnet ist, und daß das zweite Befestigungselement (40) an dem ersten Befestigungselement (30) beweglich geführt ist.

6. Vorrichtung nach einem der Ansprüche 1 bis 4, **dadurch gekennzeichnet, daß** das zweite Befestigungselement (40) starr an dem Tisch angeordnet ist, und daß das erste Befestigungselement (30) beweglich an dem Gehäuse angeordnet und an dem zweiten Befestigungselement (40) verschieblich geführt ist.

## Claims

1. A device for pivotably securing a table (10) to the housing of a hand tool, having a first securing element (30) which is arranged on the table (10), having a second securing element (40) which is arranged on the housing and which complements the first securing element (30) and having a connecting element (50) for detachably connecting the first securing element (30) to the second securing element (40), wherein the securing elements (30, 40) are displaceably guided against one another in a stepless manner and by means of the manually actuatable connecting element (50) can be fixed together by clamping, and wherein the first and second securing elements (30, 40) have clamping receptacles (35, 45) which are self-centring when clamping takes place, **characterised in that** the clamping receptacles (35, 45) are in the form of dovetail guides.

2. A device according to Claim 1, **characterised in that** the securing elements (30, 40) enable the table (10) to pivot through 45° on both sides of the housing of the hand tool.

3. A device according to Claim 1 or 2, **characterised in that** means for engageable positioning of the table in at least one pivoted/unpivoted position are provided at the securing elements (30, 40).

4. A device according to Claim 3, **characterised in that** the means for engageable positioning of the table comprise at least one locking projection arranged on the first securing element (30) in a resilient manner and at least one receptacle formed at the second securing element (40) in a manner to complement the at least one locking projection.

5. A device according to any one of the preceding Claims, **characterised in that** the first securing element (30) is rigidly arranged on the housing, and **in that** the second securing element (40) is movably guided on the first securing element (30).

6. A device according to any one of Claims 1 to 4, **characterised in that** the second securing element (40) is rigidly arranged on the table, and **in that** the first securing element (30) is movably arranged on the housing and is displaceably guided on the second securing element (40).

## Revendications

1. Dispositif pour assurer la fixation avec possibilité de basculement d'une table (10) sur le boîtier d'un outil à main dans lequel :
- sur la table (10) est monté un premier élément de fixation (30) et sur le boîtier un second élément de fixation (40) ajustable par rapport au premier,
- un élément de liaison (50) assure une liaison amovible du premier élément (30) avec le second élément de fixation (40), ces éléments (30, 40) pouvant coulisser en continu le long l'un de l'autre et être fixés l'un par rapport à l'autre, par serrage au moyen de l'élément de liaison (50) actionnable à la main,
- le premier et le second élément de fixation (30, 40) présentent des logements de serrage (35, 45) qui au serrage se centrent d'eux-mêmes,
**caractérisé en ce que**
les logements de serrage (35, 45) sont constitués par des guidages à queue d'aronde.

2. Dispositif selon la revendication 1,
**caractérisé en ce que**
les éléments de fixation (30, 40) permettent à la table (10) de basculer des deux côtés du boîtier de l'outil à main, de 45°.

3. Dispositif selon l'une quelconque des revendications 1 ou 2,
**caractérisé en ce qu'**
il est prévu sur les éléments de fixation (30, 40) des moyens pour positionner avec blocage la tige dans au moins une position basculée/non basculée.

4. Dispositif selon la revendication 3,
**caractérisé en ce que**
les moyens pour positionner avec blocage la tige comprennent au moins une came de blocage montée élastiquement sur le premier élément de fixation (30) et au moins un logement réalisé sur le second élément de fixation (40) en complémentarité à la came de blocage correspondante.

5. Dispositif selon l'une quelconque des revendications précédentes,
**caractérisé en ce que**
le premier élément de fixation (30) est monté fixe sur le boîtier tandis que le second élément de fixation (40) est guidé mobile sur le premier élément (30).

6. Dispositif selon l'une quelconque des revendications 1 à 4,
**caractérisé en ce que**
le second élément de fixation (40) est monté fixe sur le boîtier tandis que le premier élément de fixation (30) est monté mobile sur le boîtier et peut coulisser en étant guidé le long du second élément (40).
